(19) Europäisches Patentamt / European Patent Office / Office européen des brevets

(11) EP 4 478 606 A1

(12) **EUROPÄISCHE PATENTANMELDUNG**

(43) Veröffentlichungstag:
18.12.2024 Patentblatt 2024/51

(21) Anmeldenummer: 23178979.3

(22) Anmeldetag: 13.06.2023

(51) Internationale Patentklassifikation (IPC):
*H02S 50/00* (2014.01)

(52) Gemeinsame Patentklassifikation (CPC):
H02S 50/00

(84) Benannte Vertragsstaaten:
AL AT BE BG CH CY CZ DE DK EE ES FI FR GB GR HR HU IE IS IT LI LT LU LV MC ME MK MT NL NO PL PT RO RS SE SI SK SM TR
Benannte Erstreckungsstaaten:
BA
Benannte Validierungsstaaten:
KH MA MD TN

(71) Anmelder: Fronius International GmbH
4643 Pettenbach (AT)

(72) Erfinder:
• Roither, Stefan
4643 Pettenbach (AT)
• Huber, Daniel
4643 Pettenbach (AT)

(74) Vertreter: Bratovic, Nino Maria
Bratovic IP
Lissi-Kaeser-Straße 20
80797 München (DE)

(54) **VORRICHTUNG UND VERFAHREN ZUM ERKENNEN EINES LICHTBOGENS IN EINEM GLEICHSTROM-SYSTEM**

(57) Verfahren und Vorrichtung zum Erkennen eines Lichtbogens in einem Photovoltaik-System (200). Das Verfahren umfasst die Schritte:

Erfassen (S100) eines zeitlichen Verlaufs von Amplitudenwerten einer elektrischen Größe eines elektrischen Stroms aus dem Photovoltaik-System, PV-System (200);

Bestimmen (S300) mindestens eines Werts einer Permutationsentropie, PE, basierend auf dem zeitlichen Verlauf der Amplitudenwerte;

Bestimmen (S400) mindestens eines Werts einer Jensen-Shannon-Komplexität, JSK, basierend auf dem zeitlichen Verlauf der Amplitudenwerte;

Erkennen (S500), ob in dem PV-System (200) tatsächlich ein Lichtbogen aufgetreten ist, basierend auf dem mindestens einen bestimmten Wert der Permutationsentropie, PE, sowie auf dem mindestens einen bestimmten Wert der Jensen-Shannon-Komplexität, JSK.

FIG. 1

**Beschreibung**

Gebiet der Erfindung

Die Erfindung betrifft ein computerimplementiertes Verfahren sowie eine Vorrichtung zum Erkennen eines Lichtbogens in einem Gleichstrom-System, insbesondere einem Photovoltaik-System. Ein Photovoltaik-System ist ein System, welches mindestens ein Photovoltaik-Modul umfasst, insbesondere eine Mehrzahl von Photovoltaik-Modulen.

Technischer Hintergrund

In vielen elektrischen Systemen besteht die Gefahr, dass Lichtbögen auftreten können. Lichtbögen weisen hohe Temperaturen auf und können Geräte beschädigen oder sogar Brände verursachen. Während sich in Wechselstromsystemen Lichtbögen üblicherweise wieder selbst löschen, verursachen sie in Gleichstromsystemen tendenziell größere Schwierigkeiten. Dies betrifft insbesondere Photovoltaik-Systeme (im Folgenden: PV-Systeme, oder: PV-Anlagen), welche teilweise in entfernten Gebieten oder an schwer zugänglichen Stellen aufgestellt sind, sodass automatische Sicherungssysteme bereitgestellt werden müssen.

Das Erfassen eines Hinweises, dass ein Lichtbogen in dem PV-System aufgetreten ist, führt daher für gewöhnlich zur Auslösung einer Notfallprozedur, beispielsweise zum Auslösen eines Notfallschalters. Ob tatsächlich ein Lichtbogen aufgetreten ist oder nicht, ist mitunter nicht einfach festzustellen. Falsch-positives Auslösen (d.h. Auslösen der Notfallprozedur, obwohl eigentlich kein Lichtbogen vorlag) wird daher in Kauf genommen, um falsch-negatives Auslösen (d.h. fehlendes Auslösen der Notfallprozedur, obwohl tatsächlich ein Lichtbogen vorlag) zu minimieren. Da Notfallprozeduren jedoch technischen und ökonomischen Aufwand verursachen, ist es wünschenswert, dass falsch-positives Auslösen so weit wie möglich vermieden wird.

Aktuell basiert die Erkennung von Lichtbögen in PV-Systemen häufig auf einer frequenz-aufgelösten Analyse des Rauschverhaltens des PV-Systems Durch das Auftreten eines Lichtbogens wird das Rauschverhalten beeinflusst, sodass Änderungen an diesem Rauschverhalten als Hinweise interpretiert werden können, dass ein Lichtbogen vorliegt. Da jedoch auch andere Ereignisse das Rauschverhalten verändern können, kann es dabei mitunter zu falsch-positiven Hinweisen kommen.

Generell im Stand der Technik bekannt sind auch theoretische Konzepte, die sich mit der Klassifizierung und Charakterisierung von Zeitreihen (d.h. zeitlichen Verläufen von Werten einer zu beobachtenden Größe) beschäftigen. Dazu gehört beispielsweise die wissenschaftliche Veröffentlichung von C. Bandt und B. Pompe, "Permutation entropy: a natural complexity measure for time series", 2002, Phys. Rev. Lett. 88(17), p.174102, im Folgenden als "Bandt & Pompe" zitiert.

In der wissenschaftlichen Veröffentlichung von V.A. Unakafova und K. Keller, "Efficiently measuring complexity on the basis of real-world Data", 2013, Entropy, 15(10), 4392-4415, im Folgenden als "Unakafova & Keller" zitiert, wird eine Verfahren zum effizienten Berechnen von Permutationsentropien vorgestellt.

In der wissenschaftlichen Veröffentlichung von O. Rosso et al, "Distinguishing noise from chaos", 2007, Phys. Rev. Lett 99 (15), S. 154102, im Folgenden zitiert als "Rosso et al.", wird beschrieben, wie die Komplexität eines Systems mit der so genannten Jensen-Shannon-Komplexität beschrieben werden kann.

In der wissenschaftlichen Veröffentlichung von H. Azami et al, "Improved multiscale permutation entropy for biomedical signal analysis: Interpretation and application to electroencephalogram recordings", Biomed. Process. Control 2016, 23, 28-41, im Folgenden zitiert als "Azami et al.", wird ein Verfahren zum Bestimmen einer Permutationsentropie eines zeitlichen Verlaufs von Amplitudenwerten in einem EEG-Signal beschrieben.

Zusammenfassung der Erfindung

Nach all dem Vorangehenden ist es eine Aufgabe der vorliegenden Erfindung, ein verbessertes Verfahren sowie eine verbesserte Vorrichtung zum Erkennen eines Lichtbogens in einem Gleichstromsystem, insbesondere einem PV-System, bereitzustellen. Besonders bevorzugt dient die Erfindung zum Erkennen eines seriellen Lichtbogens in einem Gleichstromsystem, insbesondere einem PV-System. Dabei sollen insbesondere falsch-positive Auslösungen von Notfallprozeduren verringert oder vermieden werden, oder zumindest eine einfache Lösung dafür geschaffen werden, das falsch-positive Auslösen einer Notfallprozedur zu erkennen und wieder rückgängig zu machen.

Diese Aufgaben werden durch die Gegenstände der unabhängigen Patentansprüche gelöst.

Dementsprechend wird ein computerimplementiertes Verfahren bereitgestellt, mit den Schritten:

Erfassen eines zeitlichen Verlaufs von Amplitudenwerten einer elektrischen Größe eines elektrischen Stroms aus dem Photovoltaik-System, PV-System;
Bestimmen mindestens eines Werts einer Permutationsentropie, PE, basierend auf dem zeitlichen Verlauf der Amplitudenwerte (oder spezifisch: des zeitlichen Verlaufs der Amplitudenwerte);

Bestimmen mindestens eines Werts einer Jensen-Shannon-Komplexität, JSK, basierend auf dem zeitlichen Verlauf der Amplitudenwerte (oder spezifisch: des zeitlichen Verlaufs der Amplitudenwerte);

Erkennen, ob in dem PV-System tatsächlich ein Lichtbogen aufgetreten ist, basierend auf dem mindestens einen bestimmten Wert der Permutationsentropie, PE, sowie auf dem mindestens einen bestimmten Wert der Jensen-Shannon-Komplexität, JSK.

Die Jensen-Shannon-Komplexität, JSK, kann beispielsweise berechnet werden wie in "Rosso et al." beschrieben. Die PE kann beispielsweise mit dem in "Bandt & Pompe." beschriebenen Verfahren berechnet werden, optional auch mit der Weiterentwicklung gemäß "Azami et al."oder Unakafova & Keller.

Optional wird außerdem ein Erfassen eines Hinweises, dass in dem PV-System ein Lichtbogen aufgetreten sein könnte, durchgeführt. Wie im Folgenden näher erläutert wird, eröffnet dies eine Vielzahl von Möglichkeiten, besonders sichere Vorrichtungen und Verfahren bereitzustellen. In einigen Varianten erfolgt das Erkennen, ob in dem PV-System tatsächlich ein Lichtbogen aufgetreten ist, lediglich dann, wenn zuvor der Hinweis erfasst wurde, dass in dem PV-System ein Lichtbogen aufgetreten sein könnte. Hierdurch wird die für das Erkennen nötige Rechenleistung nur dann in Anspruch genommen, wenn es dazu einen konkreten Anlass (nämlich den Hinweis) gibt. In anderen Varianten können das Erfassen des Hinweises und das Erkennen zusammenfallen, oder völlig unabhängig voneinander erfolgen.

Bei der elektrischen Größe kann es sich beispielsweise um den elektrischen Strom oder die elektrische Spannung handeln, wobei der elektrische Strom bevorzugt wird.

Unter dem Hinweis, dass ein Lichtbogen aufgetreten sein könnte (oder, kürzer: Hinweis auf das Auftreten eines Lichtbogens) soll insbesondere ein Indiz verstanden werden, aufgrund dessen ein Auslösen einer Notfallprozedur im Sinne des Vermeidens von falsch-negativen Maßnahmen, d.h. fehlenden Auslösungen trotz vorhandenem Lichtbogen, erfolgt. Das heißt, der Hinweis wird vorteilhaft so erzeugt oder generiert, dass er immer dann vorliegt, wenn ein tatsächlicher Lichtbogen aufgetreten ist (richtig-positiv) aber auch dann auftreten kann, wenn ein Lichtbogen tatsächlich nicht aufgetreten ist (falsch-positiv).

Im Gegensatz dazu soll das Erkennen, ob ein Lichtbogen aufgetreten ist, dazu dienen, festzustellen, ob tatsächlich ein Lichtbogen aufgetreten ist, d.h. dann und nur dann positiv ausfallen, wenn auch tatsächlich ein Lichtbogen aufgetreten ist.

Das Erfassen des Hinweises, dass ein Lichtbogen aufgetreten sein könnte, kann im einfachsten Fall das Empfangen eines Signals beinhalten, welches das (mögliche) Auftreten eines Lichtbogens meldet. Das Signal kann dabei von Gleichstromsystem (z.B. PV-System) selbst stammen. Die erfindungsgemäße Vorrichtung und/oder das erfindungsgemäße Verfahren können jedoch auch selbst das Erzeugen des Hinweises umfassen.

Beispielsweise kann zunächst in einem ersten Schritt der Hinweis gemäß einem ersten Algorithmus erzeugt werden, wobei der erste Algorithmus so gestaltet ist, dass es möglichst keine falsch-negativen Ergebnisse gibt aber falsch-positive Ergebnisse in Kauf genommen werden, d.h., mit anderen Worten, dass der Hinweis eher zu oft als zu selten erzeugt wird. In einem zweiten Schritt kann dann das Erkennen, ob ein Lichtbogen aufgetreten ist, durchgeführt werden, gemäß einem zweiten Algorithmus, welcher im Vergleich zum ersten Algorithmus eine verringerte Anzahl von falsch-positiven Ergebnissen erzeugt, und vorteilhafter Weise gar keine falsch-positiven Ergebnisse erzeugt. Bei dieser Variante kann das Ausführen des ersten Algorithmus auch als Lichtbogen-Warnung, und das Ausführen des zweiten Algorithmus auch als Lichtbogen-Diagnose bezeichnet werden.

In manchen Ausführungsformen können das Erfassen des Hinweises, dass ein Lichtbogen aufgetreten sein könnte und das Erkennen, ob ein Lichtbogen aufgetreten ist, zusammenfallen, nämlich wenn der Hinweis bereits mit einem derart ausgereiften Algorithmus erzeugt wird, dass er keine, oder praktisch keine, falsch-positiven Ergebnisse erzeugt. Die vorliegende Erfindung stellt sowohl 2-stufige als auch eine solche 1-stufigen Varianten bereit.

Die Erfinder haben festgestellt, dass sich als Entropiemetrik für Gleichstromsysteme, insbesondere für PV-Systeme, die Permutationsentropie, PE, besonders gut eignet. Im Folgenden wird die Erfindung daher vornehmlich bezogen auf die PE als Entropiemetrik beschrieben werden. Besonders geeignet ist die Berechnung der Permutationsentropie nach dem Bandt-Pompe-Verfahren, siehe "Bandt & Pompe". Es versteht sich jedoch, dass der Fachmann auch andere aus dem Stand der Technik bekannte Entropiemetriken verwenden kann, etwa "Approximate Entropy", ApEn, "Sample Entropy", SampEn, "Fuzzy Entropy" und/oder dergleichen.

Im Folgenden werden einige Begriffe teilweise abgekürzt, z.B. mit "PV" statt "Photovoltaik", "PE" statt Permutationsentropie oder dergleichen. Teilweise werden die Begriffe zusammen mit ihren Abkürzungen verwendet. Wo es für das Verständnis komplexer Sachverhalte einfacher erscheint, wird nur die Abkürzung oder auch nur der Begriff selbst verwendet. Alle drei Formen sollen jedoch als äquivalent verstanden werden.

Die Verwendung der Permutationsentropie, PE, hat zahlreiche Vorteile: sie ist frei von parametrischen Modellannahmen, robust gegenüber Rauschen, effizient berechenbar, invariant unter nicht-linearen monotonen Transformationen der Zeitreihen, berücksichtigt die zeitliche Ordnung (und damit die Kausalität) innerhalb einer Zeitreihe von realen Werten, und erschließt den komplexen dynamischen Inhalt von nicht-linearen Zeitreihen.

Die Erfinder haben festgestellt, dass sich als Komplexitätsmetrik für Gleichstromsysteme, insbesondere für PV-Systeme, die Jensen-Shannon-Komplexität, JSK, besonders gut eignet. Im Folgenden wird die Erfindung daher vornehmlich bezogen auf die JSK als Komplexitätsmetrik beschrieben werden. Es versteht sich jedoch, dass der Fachmann auch andere aus dem Stand der Technik bekannte Komplexitätsmetriken verwenden kann.

Die Permutationsentropie gibt, grob gesagt, an, wie stark sich bestimmte Muster $\Pi_j$ (engl. "pattern") innerhalb einer Zeitreihe, d.h. eines zeitlichen Verlaufs, häufen, wobei die Muster $\Pi_j$ nur auf die relative Größe von Werten $A(t_i)$ von Zeitserienausschnitten zueinander abstellen ("ordinale Repräsentation"). Das heißt, die Zeitserienausschnitte (1, 2, 3) und (300, 795, 5900) weisen dasselbe Muster $\Pi_j$ auf, nämlich, dass die Werte $A(t_i)$ von einem zum nächsten stets zunehmen.

Wichtige Parameter der Permutationsentropie sind die Musterlänge D (auch "Einbettungsdimension" oder, engl., "embedding dimension") genannt, sowie die Einbettungsverzögerung $\tau$ (engl. "embedding delay").

Die Musterlänge D gibt an, wie lange die Muster $\Pi_j$ sind, welche in der Permutationsentropie PE untersucht werden, sodass D! ("D-Fakultät") die Anzahl der möglichen Muster $\Pi_j$ ergibt. Anders ausgedrückt, werden Zeitserienausschnitte der Länge D genommen und die Muster $\Pi_j$ darin untersucht, insbesondere gezählt. Die Erfinder haben festgestellt, dass insbesondere eine Musterlänge D zwischen 3 und 7 für die vorliegende Erfindung vorteilhaft ist.

Die verschiedenen Muster können beispielsweise derart identifiziert werden, dass innerhalb eines Zeitserienausschnitts der Länge D der kleinste Wert $A_{min}$ den Wert 0 erhält, der nächstgrößere Wert den Wert 1, und so weiter, bis zum größten Wert $A_{max}$, welcher den Wert D-1 erhält. Die verschiedenen möglichen Muster $\Pi_j$ entsprechen dann genau den möglichen Permutationen von (0..D-1).

Bei einer Musterlänge D=2 gibt es beispielsweise nur D!=2!=2 verschiedene Muster, nämlich (0, 1), d.h. der nachfolgende Wert ist größer als der vorangehende, und (1, 0), d.h. der nachfolgende Wert ist kleiner als der vorangehende. Bei D=3 gibt es dann bereits D!=3!=6 verschiedene Muster: (0, 1, 2), (0, 2, 1), (1, 0, 2), (1, 2, 0), (2, 0, 1), und (2, 1, 0). Alle in einer Zeitreihe $x_t=(A(t_1), A(t_2), ... A(n_x))$ gefundenen Muster $\Pi_j$ ergeben die Menge $\pi_p(x_t)$, mit $n_x$ der Länge der Zeitreihe, wobei mehrfach vorhandene Muster $\Pi_j$ auch mehrfach in $\pi_p(x_t)$ eingehen. Daraus kann für jedes Muster $\Pi_j$ eine normierte Musterdichte $\rho_j$ berechnet werden zu:

$$\rho_j(\Pi_j) = \frac{\text{Zahl der Muster von Typ } \Pi_j \text{ in } \pi_j}{n_x} \qquad (1)$$

Eine nicht-normierte Entropie S kann dann berechnet werden zu:

$$S = -\sum_{i=1}^{n_\pi} \rho(\Pi_i)\log(\Pi_i), \qquad (2)$$

wobei $n_\pi$ die Anzahl der vorhandenen verschiedenen Muster $\Pi_j$ ist, d.h. von 1 (alle Muster in der Zeitreihe xt sind gleich, d.h. die Werte A steigen entweder monoton oder fallen monoton in der Zeit) bis D! rangiert (alle möglichen Muster sind vorhanden).

Schließlich kann dann die (normierte) Permutationsentropie PE berechnet werden zu

$$PE = S/\log(n_\pi). \qquad (3)$$

Die Einbettungsverzögerung $\tau$ gibt an, mit wieviel Abstand Werte $A(t_i)$ der Zeitreihe xt jeweils ausgewählt werden, um einen Zeitserienausschnitt zu bilden, dessen Muster $\Pi_j$ dann bestimmt wird. Bei $\tau = 1$ wird ein Zeitserienausschnitt, dessen Muster zu bestimmen ist, aus D aufeinanderfolgenden nächsten Nachbarn gebildet, bei $\tau = 2$ aus den jeweils aufeinanderfolgenden übernächsten Nachbarn, und so weiter.

Für die Einbettungsverzögerung $\tau$ haben die Erfinder vorteilhafte Werte zwischen 1 und 5 festgestellt (beide Werte mit enthalten), beispielsweise $\tau=1$, $\tau=3$, oder $\tau=5$. Durch die Variation von $\tau$ können verschiedene Skalen abgedeckt werden.

Alternativ kann die Permutationsentropie auch als eine "Multiscale Entropy" (MPE), insbesondere mit dem in "Azami et al." beschriebenen Verfahren berechnet werden.

Die Jensen-Shannon-Komplexität, JSK, wiederum ist, einfach ausgedrückt, ein Komplexitätsmaß, das sich aus dem Produkt der normierten Shannon-Entropie und dem Ungleichgewicht QJS berechnet. Dabei beschreibt das Ungleichgewicht die Unterschiedlichkeit der Verteilung der Permutations-Muster P zur Gleichverteilung Pe={1/N, ... 1/N}, wobei N=D!. Die Unterschiedlichkeit der Verteilungen wird hierbei über die Jensen-Shannon Divergenz bestimmt. Die JSK kann für einen bestimmten Wert der PE verschiedene Werte zwischen einem Minimalwert und einem Maximalwert annehmen, der durch D! gegeben ist. Dadurch liefert die JKS zur Charakterisierung einer Zeitserie zusätzliche Information, welche nicht in der PE enthalten sind.

Gemäß einigen bevorzugten Ausführungsformen, Varianten oder Weiterbildungen von Ausführungsformen wird eine Zeitreihe von Tupeln (PE ($t_i$), JSK($t_i$)) für eine Mehrzahl von Zeitpunkten $t_i$ berechnet. Das Erkennen, ob ein Lichtbogen aufgetreten ist, basiert vorteilhaft auf der berechneten Zeitreihe. Die Zeitpunkte sind vorteilhaft periodisch voneinander beanstandet. Die Erfinder haben festgestellt, dass die PE-JSK-Parameterebene ein besonders zuverlässiges Erkennen, ob ein Lichtbogen aufgetreten ist oder nicht, ermöglicht.

Vorteilhaft ist es auch, wenn die Permutationsentropie, PE, jeweils in einem gleitenden Fenster über die insgesamt verfügbare Zeitreihe der Amplitudenwerte berechnet wird, d.h. wenn die Zählung der Muster etc. immer nur in einer Zeitreihe $x_t$ von der Größe des gleitenden Fensters durchgeführt wird. Die Größe W dieses gleitenden Fensters ist ein weiterer Hyperparameter. Grundsätzlich erlaubt eine größere Musterlänge D es, komplexere Vorgänge zu beschreiben. Gleichzeitig führt eine zu große Musterlänge D dazu, dass in einem zeitlichen Verlauf von Amplitudenwerten von begrenzter Länge nicht alle möglichen Muster auch vorkommen können, was die Komplexitätsanalyse wiederum behindert. Es ist daher vorteilhaft, wenn W>5D! gilt.

Das gleitende Fenster wird bevorzugt immer um einen einzelnen Amplitudenwert weitergeschoben, sodass jedes Mal nur der erste Zeitserienausschnitt das gleitende Fenster verlässt, und am Ende ein neuer, bisher noch nicht untersuchter Zeitserienausschnitt in das gleitende Fenster aufgenommen wird. Somit können sich von Fenster zu Fenster maximal zwei Anzahlen von Mustern ändern. Der Unakafova-Ansatz (siehe Unakafova & Keller) ist für die vorliegende Erfindung vorteilhaft, denn er kann die genannten Eigenschaften vorteilhaft ausnutzen, um - unter Verwendung von vorberechneten Tabellen - besonders effizient zu rechnen.

Gemäß einigen bevorzugten Ausführungsformen, Varianten oder Weiterbildungen von Ausführungsformen wird zumindest eine zeitliche Trajektorie von Punkten in einem PE-JSK-Parameterraum ("PE-JSK-Trajektorie") berechnet. Das Erkennen, ob ein Lichtbogen aufgetreten ist, basiert vorteilhaft zumindest auf der berechneten zeitlichen Trajektorie, insbesondere auf aus der Trajektorie ableitbaren Größen wie etwa die erste Ableitung/einem Gradienten, die zweite Ableitung, eine Streuung zwischen Minimal- und Maximalwerten und/oder dergleichen. Die Erfinder haben festgestellt, dass die Eigenschaften dieser Trajektorie ein besonders zuverlässiges Erkennen, ob ein Lichtbogen aufgetreten ist oder nicht, ermöglichen. Auch die zeitliche Trajektorie kann vorteilhaft gemäß dem Unakafova-Ansatz aus Unakafova & Keller erzeugt und berechnet werden, d.h., mit einem gleitenden Zeitfenster der Größe W.

Gemäß einigen bevorzugten Ausführungsformen, Varianten oder Weiterbildungen von Ausführungsformen werden die berechnete Zeitreihe von Tupeln und/oder die berechnete zeitliche Trajektorie in eine Künstliche-Intelligenz-Einheit, KIE, eingegeben, welche das Erkennen, ob ein Lichtbogen aufgetreten ist, darauf basierend durchführt. Die KIE kann ein überwacht trainiertes ("supervised learning") oder unüberwacht trainiertes ("unsupervised learning") Maschinenlernenmodell, MLM, umfassen. Ein vorteilhaft zu verwendendes MLM kann beispielsweise ein Cluster-Analyse-Verfahren umfassen oder daraus bestehen. Überwacht trainierte MLMe können beispielsweise ein künstliches neuronales Netz, KNN, aufweisen oder daraus bestehen.

Die Eingabedaten (engl. "input") des MLM können insbesondere PE-Werte und/oder JSK-Werte aufweisen, oder Größen sein, die auf PE-Werten und/oder JSK-Werten basieren, insbesondere in einer der hierin beschriebenen Varianten wie etwa (PE(ti), JSK(ti))-Tupeln, Trajektorien im PE-JSK-Parameterraum, und/oder dergleichen mehr. Bei der Berechnung von sowohl PE als auch JSK können verschiedene Berechnungsmethoden verwendet werden, welche entweder Hyperparameter sein können (d.h. beim Entwerfen und Trainieren des MLM festgelegt werden), oder als Parameter verwendet werden können, d.h., durch das MLM während dessen Trainings selbst festgelegt werden.

Solche Hyperparameter/Parameter sind beispielsweise die Musterlänge D (auch "Einbettungsdimension" oder, engl., "embedding dimension") genannt, die Fenstergröße W, oder die Einbettungsverzögerung $\tau$ (engl. "embedding delay").

Es kann auch vorgesehen sein, dass mehrere Permutationsmetriken und/oder mehrere Komplexitätsmetriken als Eingabedaten verwendeten werden, sodass das MLM während seines Training "lernt", welche Entropiemetriken und/oder welche Komplexitätsmetriken, und in welcher Kombination, die beste Grundlage für die Entscheidung, ob ein Lichtbogen tatsächlich vorlag, bilden.

Insbesondere können mehrere Permutationsentropien und/oder mehrere Jensen-Shannon-Komplexitäten als Eingabedaten verwendet werden, welche jeweils unterschiedliche Hyperparameter aufweisen können. Beispielsweise können zwei verschiedene Permutationsentropien (oder, anders ausgedrückt, Permutationsentropien welche mit zwei verschiedenen Hyperparametersätzen berechnet wurden) unter den Eingabedaten sein: etwa eine Zeitserie einer ersten Permutationsentropie PE-1, welche mit D=3 und $\tau = 1$, berechnet wird, also relativ feingranular ist, und eine Zeitserie einer zweiten Permutationsentropie PE-2, welche mit D=5 und $\tau = 2$ berechnet wird, also Korrelationen mit längerer Reichweite prüft.

Gemäß einigen bevorzugten Ausführungsformen, Varianten oder Weiterbildungen von Ausführungsformen erfolgt ein Erfassen eines Hinweises, dass ein Lichtbogen aufgetreten sein könnte, und zwar besonders vorteilhaft basierend auf dem mindestens einen bestimmten Wert der Permutationsentropie, PE, und/oder auf dem mindestens einen bestimmten Wert der Jensen-Shannon-Komplexität, JSK. Alternativ kann das Erfassen des Hinweises auch - wie im Stand der Technik bekannt - mittels einer Analyse der spektralen Leistungsdichte des Rauschens im DC-Stromkreis erfolgen.

Gemäß einigen bevorzugten Ausführungsformen, Varianten oder Weiterbildungen von Ausführungsformen umfasst das Verfahren außerdem ein Auslösen einer Notfallprozedur (bereits) als Reaktion auf das Erfassen des Hinweises. Das Erkennen, ob tatsächlich ein Lichtbogen aufgetreten ist, erfolgt bei dieser Variante optional danach (d.h., zeitlich nachgelagert). Die Notfallprozedur wird bevorzugt wieder ausgesetzt, wenn erkannt wird, dass tatsächlich kein Lichtbogen aufgetreten ist.

Gemäß einigen bevorzugten Ausführungsformen, Varianten oder Weiterbildungen von Ausführungsformen umfasst das Verfahren ein Auslösen einer Notfallprozedur (insbesondere dann und nur dann), falls erkannt wird, dass in dem PV-System tatsächlich ein Lichtbogen aufgetreten ist. Bei dieser Variante wird also die Notfallprozedur vorteilhaft nicht bereits mit dem Erfassen des Hinweises, dass ein Lichtbogen aufgetreten sein könnte, sondern erst mit dem Erkennen eines tatsächlichen Lichtbogens ausgelöst, wobei in weiteren Varianten das Erfassen des Hinweises und das Erkennen des Lichtbogens auch zusammenfallen können.

Das Auslösen der Notfallprozedur kann beispielsweise das Auslösen eines Lichtbogenfehler-Schaltkreisunterbrechers (LBFSU; engl. Arc Fault Circuit Interrupter, AFCI) umfassen.

Die Notfallprozedur kann beinhalten, dass die Anlage wieder aktiviert wird, falls von dem Ereignis keine Gefahr ausgeht. Sollte es wiederholt zu Abschaltungen durch die Notfallprozedur kommen, kann diese auch beinhalten, dass eine technische Prüfung der Anlage eingeleitet wird. Die Notfallprozedur kann es auch umfassen, dass anstelle einer Abschaltung der Strom auf einen Wert R reduziert wird, sodass der Lichtbogen gelöscht wird, wobei R ein wählbarer Parameter ist.

Alternativ oder zusätzlich kann das Auslösen der Notfallprozedur auch umfassen, dass eine Abschaltvorrichtung ausgelöst wird, zum Beispiel durch einen Wechselrichter des PV-Systems mindestens ein Relais geöffnet wird, um den Stromfluss dadurch zu unterbrechen .

Gemäß einigen bevorzugten Ausführungsformen, Varianten oder Weiterbildungen von Ausführungsformen wird der erfasste zeitliche Verlauf der Amplitudenwerte einer Vorfilterung unterzogen, um einen gefilterten zeitlichen Verlauf der Amplitudenwerte zu erzeugen. Das Bestimmen des mindestens einen Werts der Permutationsentropie, PE, basierend auf dem gefilterten zeitlichen Verlauf der Amplitudenwerte und/oder das Bestimmen des mindestens einen Werts der Jensen-Shannon-Komplexität, JSK, erfolgt dann vorteilhaft basierend auf dem gefilterten zeitlichen Verlauf der Amplitudenwerte.

Die Vorfilterung kann beispielsweise umfassen:

- ein Herausfiltern von periodischen Signalen; und/oder
- ein Ausblenden von Frequenzbereichen in dem zeitlichen Verlauf der Amplitudenwerte, welche für die Erkennung eines Lichtbogens nicht relevant oder weniger relevant oder unvorteilhaft sind.

Das Herausfiltern von periodischen Signalen kann beispielsweise mittels statistischer Verfahren oder Autokorrelation erfolgen. Auszublendende Frequenzbereiche können mittels einer spektralen oder temporalen Filterfunktion, die insbesondere auf einer Fourier-Analyse und/oder einer Wavelet-Analyse basieren kann, ausgeblendet werden.

Sofern sich aus dem Kontext nicht etwas Gegenteiliges ergibt, kann hierin unter dem "zeitlichen Verlauf der Amplitudenwerte" somit entweder der rohe zeitliche Verlauf der Amplitudenwerte, wie erfasst, zu verstehen sein, als auch (bevorzugt) der gefilterte zeitliche Verlauf von Amplitudenwerten. Aus Gründen der Knappheit werden nicht jeweils beide Varianten an jeder Stelle wiederholt.

Gemäß einem weiteren Aspekt stellt die Erfindung eine Vorrichtung zum Erkennen eines Lichtbogens in einem Photovoltaik-System bereit, umfassend:

einen Wechselrichter zum Erzeugen von Wechselstrom aus einem von einem Photovoltaik-System empfangenen Gleichstrom, umfassend zumindest ein Messmodul, welches zum Erfassen eines zeitlichen Verlaufs von Amplitudenwerten einer elektrischen Größe des empfangenen Gleichstroms ausgebildet ist; und wobei die Vorrichtung außerdem umfasst:

ein Rechenmodul, welches zum Bestimmen mindestens eines Werts einer Permutationsentropie, PE, des zeitlichen Verlaufs von Amplitudenwerten sowie zum Bestimmen mindestens eines Werts einer Jensen-Shannon-Komplexität, JSK, des zeitlichen Verlaufs von Amplitudenwerten eingerichtet ist; ein Erkennungsmodul, welches dazu eingerichtet ist, zu erkennen, ob in dem PV-System ein Lichtbogen aufgetreten ist, basierend auf dem mindestens einen bestimmten Wert der Permutationsentropie, PE, sowie auf dem mindestens einen bestimmten Wert der Jensen-Shannon-Komplexität, JSK; und eine Schutzeinrichtung, mittels welcher eine Notfallprozedur zum Schutz des Photovoltaik-Systems vor einem Lichtbogen auslösbar ist.

Optional kann die Vorrichtung (entweder als Teil des Wechselrichters oder auch außerhalb davon) ein Warnmodul aufweisen, welches dazu ausgebildet ist, einen Hinweis zu erzeugen, dass ein Lichtbogen in dem Photovoltaik-System, PV-System, aufgetreten sein könnte. Die Vorteile des Vorliegens eines solchen Hinweises wurden im Vorangehenden bereits ausführlich erläutert und werden auch im Folgenden noch weiter verdeutlicht werden.

Die erfindungsgemäße Vorrichtung ist vorteilhat mit dem Verfahren gemäß dem erfindungsgemäßen Verfahren betreibbar, sowie das Verfahren mit der erfindungsgemäßen Vorrichtung durchführbar ist. Sämtliche in Bezug auf das Verfahren beschriebenen Varianten, Optionen, Weiterbildungen und Ausführungsformen sind somit auch auf die erfindungsgemäße Vorrichtung anwendbar und umgekehrt.

Sämtliche Bestandteile der Vorrichtung, insbesondere die verschiedenen Module und/oder Einrichten, können vorteilhaft allesamt in den Wechselrichter integriert sein, sodass die Vorrichtung kompakt, robust, und weitgehend autonom ist. Alternativ können auch einzelne Bestandteile, beispielsweise Module, welche rechenintensive Vorgänge durchführen, ausgelagert sein, etwa in einen Remote-Server, eine Cloud-basierte Recheneinrichtung, oder dergleichen. Auf diese Weise steht mehr Rechenleistung bereit, ohne dass die Bauform des Wechselrichters deswegen größer werden muss.

Die verschiedenen Module oder Einrichtungen können jeweils in Hardware und/oder in Software vorliegen. Insbesondere können die Module als Software implementiert sein, welche durch ein Computersystem ausgeführt wird oder ausführbar ist. Die Bezeichnung als ein Modul oder eine Einrichtung bedeutet dabei nicht, dass zwingender Weise ein klar separates Modul oder ein separater Programmcode-Abschnitt vorhanden sein muss. Vielmehr beschreiben die Module und Einrichtungen Funktionen, welche auch gemeinsam und/oder miteinander verwoben realisiert oder implementiert sein können.

Das Computersystem (oder: die Recheneinrichtung) kann eine beliebige Schaltung oder Kombination von Schaltungen umfassen. Bei einem Ausführungsbeispiel kann das Computersystem einen oder mehrere Prozessoren umfassen, die von einem beliebigen Typ sein können. Hierbei kann "Prozessor" eine beliebige Art von Rechenschaltung oder Recheneinrichtung bedeuten, wie beispielsweise ( ohne hierauf beschränkt zu sein) einen Mikroprozessor, einen Mikrocontroller, einen Mikroprozessor mit komplexem Befehlssatz (CISC), einen Mikroprozessor mit reduziertem Befehlssatz (RISC), einen Sehr-langes-Anweisungswort- (Very Long Instruction Word; VLIW) Mikroprozessor, einen Graphikprozessor (graphics processing unit; GPU), einen digitalen Signalprozessor (DSP), einen Multi-Core-Prozessor, ein feld-programmierbares Gate-Array (FPGA) oder irgendeinen anderer Typ von Prozessor oder Verarbeitungsschaltung.

Andere Typen von Schaltungen, die von dem Computersystem umfasst sein können, können eine speziell angefertigte Schaltung, eine anwendungsspezifische integrierte Schaltung (ASIC) oder Ähnliches, wie beispielsweise eine oder mehrere Schaltungen (z. B. eine Kommunikationsschaltung) zur Verwendung bei drahtlosen Vorrichtungen wie z. B. Mobiltelefonen, Tablet-Computern, Laptop-Computern, Funksprechgeräten und ähnlichen elektronischen Systemen sein. Das Computersystem kann eine oder mehrere Speichervorrichtungen umfassen, die ein oder mehrere Speicherelemente umfassen können, die für die jeweilige Anwendung geeignet sind, wie beispielsweise einen Hauptspeicher in der Form eines Direktzugriffsspeichers (RAM, Random Access Memory), eine oder mehrere Festplatten und/oder ein oder mehrere Laufwerke, die entfernbare Medien, wie beispielsweise CDs, Flash-Speicherkarten, DVD und Ähnliches handhaben (können).

Gemäß einigen bevorzugten Ausführungsformen, Varianten oder Weiterbildungen von Ausführungsformen weist das Erkennungsmodule außerdem ein Künstliche-Intelligenz-Submodul, KIS, auf, welches eine Künstliche-Intelligenz-Einheit, KIE, implementiert, welche dazu trainiert und eingerichtet ist, basierend auf dem mindestens einen bestimmten Wert der JSK und dem mindestens einen Wert der PE zu erkennen, ob ein Lichtbogen aufgetreten ist. Wie im Vorangehenden bereits beschrieben wurde, kann es sich bei der Künstliche-Intelligenz-Einheit, KIE, insbesondere um ein künstliches neuronales Netz, KNN, handeln.

Gemäß einigen bevorzugten Ausführungsformen, Varianten oder Weiterbildungen von Ausführungsformen weist die Vorrichtung außerdem eine Cloud-basierte Recheneinrichtung auf, wobei der Wechselrichter außerdem eine Kommunikationsschnittstelle zur bidirektionalen Kommunikation mit der Cloud-basierten Recheneinrichtung aufweist, und wobei das Rechenmodul und/oder das Erkennungsmodul durch die Cloud-basierte Recheneinrichtung implementiert ist.

Bei dieser Variante kann die Vorrichtung insbesondere eine Vielzahl von Wechselrichtern umfassen, welche auch an mehrere bzw. verschiedene PV-Systeme angeschlossen sein können. Somit können das Rechenmodul und/oder das Erkennungsmodul zentral bereitgestellt werden, während beispielsweise die Schutzeinrichtung in jedem einzelnen Wechselrichter, oder zumindest in jedem einzelnen PV-System, separat vorgesehen sein kann. Dies ermöglicht eine einfache Wartung und einfaches Updaten der rechenintensiven Rechen- bzw. Erkennungsmodule. Dies ist besonders vorteilhaft, wenn das Erkennungsmodul ein Künstliche-Intelligenz-Submodul, KIS, umfasst, welches eine hohe Rechenleistung erfordert und welches vorteilhaft regelmäßig mit zusätzlichem Training geupdated werden kann.

Gemäß einigen bevorzugten Ausführungsformen, Varianten oder Weiterbildungen von Ausführungsformen ist die Schutzeinrichtung dazu eingerichtet, die Notfallprozedur als Reaktion auf das Erfassen des Hinweises, dass ein Lichtbogen aufgetreten sein könnte, auszulösen. Das Erkennungsmodul ist hierbei vorteilhaft dazu eingerichtet, danach zu erkennen, ob tatsächlich ein Lichtbogen aufgetreten ist, und die Schutzeinrichtung wiederum vorteilhaft dazu eingerichtet, die Notfallprozedur wieder auszusetzen, falls das Erkennungsmodul erkennt, dass tatsächlich kein Lichtbogen aufgetreten ist.

In manchen Varianten kann das Aussetzen (oder: Zurücksetzen) der Notfallprozedur mittels eines Zählers gezählt werden, der beispielsweise im Wechselrichter angeordnet sein kann. Es kann vorgesehen sein, dass bei Erreichen eines vordefinierten Schwellwerts (entweder absolut, oder pro vordefiniertem Zeitabschnitt) des Zählers die Notfallprozedur (oder eine im Schutzumfang darüberhinausgehende Abschaltprozedur) so ausgelöst wird, dass sie nicht automatisch (etwa wie zuvor beschrieben) wieder ausgesetzt werden kann. In diesem Fall kann das Eingreifen eines menschlichen Technikers, entweder vor Ort oder durch Remote-Wartung, eine Voraussetzung für das Aussetzen der Notfallprozedur (oder Abschaltprozedur) sein. Als Reaktion auf das Erreichen des vordefinierten Schwellwerts kann automatisch ein Signal ausgesendet werden, welches das Eingreifen des menschlichen Technikers anfordert.

Gemäß einigen bevorzugten Ausführungsformen, Varianten oder Weiterbildungen von Ausführungsformen ist die Schutzeinrichtung dazu eingerichtet, die Notfallprozedur auszulösen, falls das Erkennungsmodul erkannt hat, dass in dem PV-System tatsächlich ein Lichtbogen aufgetreten ist.

Gemäß einem weiteren Aspekt stellt die Erfindung ein Computerprogrammprodukt bereit, welches ausführbaren Programmcode umfasst, welcher dazu ausgelegt ist, wenn er ausgeführt wird, das erfindungsgemäße Verfahren durchzuführen.

Gemäß einem weiteren Aspekt stellt die Erfindung ein nicht-flüchtiges, computerlesbares Datenspeichermediums bereit, welches ausführbaren Programmcode umfasst, welcher dazu ausgelegt ist, wenn er ausgeführt wird, das erfindungsgemäße Verfahren durchzuführen.

Gemäß einem weiteren Aspekt stellt die Erfindung einen Datenstrom bereit, welches ausführbaren Programmcode umfasst (oder dazu ausgelegt ist, ausführbaren Programmcode zu generieren), welcher dazu ausgelegt ist, wenn er ausgeführt wird, das erfindungsgemäße Verfahren durchzuführen.

Weitere Aspekte sowie bevorzugte Ausführungsformen, Varianten und Weiterbildungen von Ausführungsformen ergeben sich aus den Unteransprüchen sowie aus der Beschreibung unter Bezugnahme auf die Figuren.

Kurze Beschreibung der Figuren

Die Erfindung wird nachstehend anhand von Ausführungsbeispielen in den Figuren der Zeichnungen näher erläutert. Die teilweise schematisierte Darstellung zeigen hierbei:

Fig. 1    eine schematische Darstellung zum Erläutern einer Vorrichtung gemäß einer Ausführungsform der vorliegenden Erfindung;

Fig. 2    eine schematische Darstellung des PE-JSK-Parameterraums zur Erläuterung der Funktionsweise der Vorrichtungen gemäß Fig. 1;

Fig. 3    eine schematische Darstellung zum Erläutern einer Vorrichtung gemäß einer weiteren Ausführungsform der vorliegenden Erfindung;

Fig. 4    ein schematisches Flussdiagramm zum Erläutern eines Verfahrens gemäß noch einer weiteren Ausführungsform der vorliegenden Erfindung;

Fig. 5    ein schematisches Flussdiagramm zum Erläutern eines Verfahrens gemäß noch einer weiteren Ausführungsform der vorliegenden Erfindung;

Fig. 6    ein schematisches Blockdiagramm zum Erläutern eines Computerprogrammprodukts gemäß einer weiteren Ausführungsform der vorliegenden Erfindung; und

Fig. 7    ein schematisches Blockdiagramm zum Erläutern eines Datenspeichermediums 500 gemäß einer weiteren Ausführungsform der vorliegenden Erfindung.

In sämtlichen Figuren sind gleiche bzw. funktionsgleiche Elemente und Vorrichtungen - sofern nicht anders angegeben ist - mit denselben Bezugszeichen versehen worden. Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

Detaillierte Beschreibung der Figuren

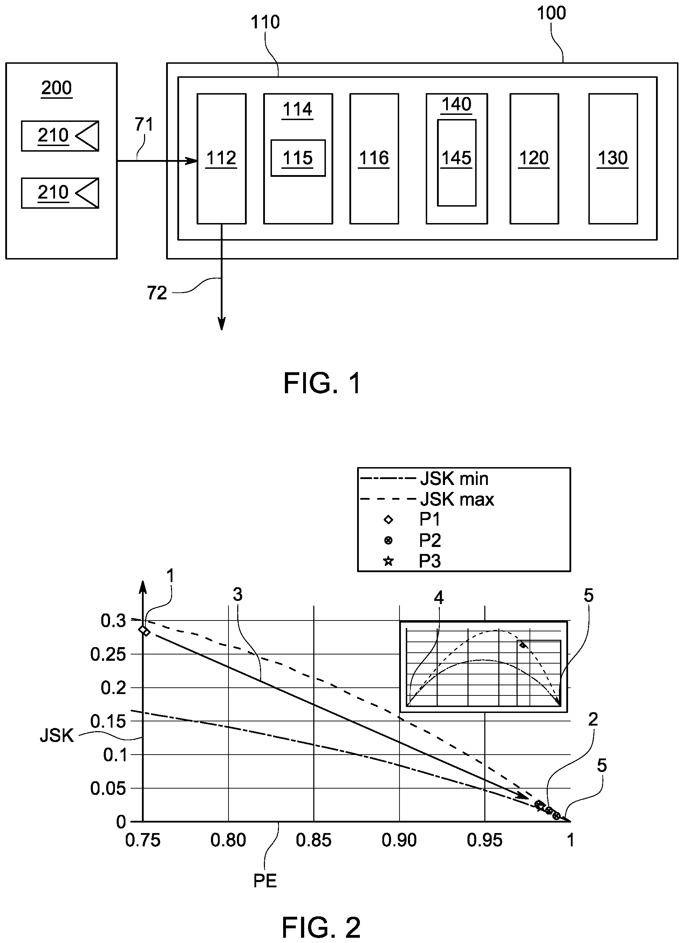

Fig. 1 zeigt eine schematische Darstellung zum Erläutern einer Vorrichtung 100 zum Erkennen eines Lichtbogens in einem Photovoltaik-System 200 gemäß einer Ausführungsform der vorliegenden Erfindung. Das Photovoltaik-System 200 (PV-System) kann einen oder mehrere Photovoltaik-Modulen 210 (PV-Modulen) aufweisen, welche aus Sonnenlicht Gleichstrom 71 erzeugen. Das PV-System 200 ist in Fig. 1 nur rudimentär dargestellt. Es versteht sich, dass ein solches PV-System einen oder mehrere Strings umfassen kann, von denen jeder eine Vielzahl von PV-Modulen 210 aufweist.

Ein Wechselrichter 110 der Vorrichtung 100 ist dazu ausgelegt und eingerichtet, den Gleichstrom 71 von dem Photovoltaik-System 200 zu empfangen und in einen Wechselstrom 72 umzuwandeln, beispielsweise mittels Leistungselektronik 112.

Der Wechselrichter 110 umfasst außerdem zumindest ein Messmodul 114 und, in dieser Ausführungsform, auch ein Warnmodul 116.

Das Messmodul 114 ist zum Erfassen eines zeitlichen Verlaufs von Amplitudenwerten, A(ti), einer elektrischen Größe des empfangenen Gleichstroms 71 ausgebildet, bevorzugt insbesondere des elektrischen Stroms (im Folgenden teilweise nur kurz als "Strom" bezeichnet). Hierzu kann das Messmodul 114 beispielsweise einen Powerline-Communication-(PLC-)Transformator sowie einen Stromwandler umfassen, welcher dazu ausgelegt ist, den PLC-Transformator auszulesen.

Das Warnmodul 116 ist dazu ausgebildet, einen Hinweis zu erzeugen, dass ein Lichtbogen in dem Photovoltaik-System 200 aufgetreten sein könnte. Wie im Vorangehenden bereits ausführlich beschrieben wurde, kann ein solcher Hinweis auf viele verschiedene Weisen entstehen, beispielsweise wie im Stand der Technik basierend auf einem Rauschen in der Stromdomäne, d.h. im Stromsignal. Das Warnmodul 116 kann in anderen Ausführungsformen auch außerhalb des Wechselrichters 110 angeordnet sein, wobei dann der Wechselrichter 110 dazu eingerichtet ist, den Hinweis von dem Warnmodul 116 zu empfangen.

Die Vorrichtung 100 umfasst außerdem ein Rechenmodul 120, welches zum Bestimmen mindestens eines Werts einer Permutationsentropie, PE, des zeitlichen Verlaufs von Amplitudenwerten $A(t_i)$ sowie zum Bestimmen mindestens eines Werts einer Jensen-Shannon-Komplexität, JSK, des zeitlichen Verlaufs von Amplitudenwerten $A(t_i)$ eingerichtet ist. Wie im Vorangehenden bereits ausführlich beschrieben wurde, können PE und JSK mit unterschiedlichen Algorithmen berechnet werden, die für sich jeweils im Stand der Technik bekannt sind, wobei auch zukünftig noch entwickelte Algorithmen verwendet werden können.

Die Vorrichtung 100 umfasst außerdem ein Erkennungsmodul 130, welches dazu eingerichtet ist, zu erkennen, ob in dem PV-System 200 ein Lichtbogen aufgetreten ist, basierend auf dem mindestens einen bestimmten Wert der Permutationsentropie, PE, sowie auf dem mindestens einen bestimmten Wert der Jensen-Shannon-Komplexität, JSK

Die Vorrichtung 100 umfasst zusätzlich auch eine Schutzeinrichtung 140, mittels welcher eine Notfallprozedur zum Schutz des PV-Systems 200 und der umliegenden Infrastruktur bei Auftreten eines Lichtbogens auslösbar ist. Bei der Notfallprozedur kann es sich insbesondere um das Auslösen eines Leistungsschalters zum Unterbrechen einer elektrischen Stromleitung, an der der Lichtbogen aufgetreten ist, handeln.

Die Schutzeinrichtung 140 ist in Fig. 1 nur schematisch dargestellt. Es versteht sich, dass diese eine Vielzahl von Steuer- und Schaltungskomponenten aufweisen kann, die ganz oder teilweise auch im PV-System 200 angeordnet sind. Somit kann das PV-System 200 selbst auch als ein Teil der erfindungsgemäßen Vorrichtung 100 aufgefasst werden. Möglich ist es aber auch, dass das Auslösen der Notfallprozedur durch die Schutzeinrichtung 140 lediglich das Senden eines Notfallsignals umfasst (oder daraus besteht), beispielsweise an einen oder mehrere Leistungsschalter des PV-Systems 200, oder eine interne oder integrierte Schutzeinrichtung des PV-Systems 200 selbst.

In Fig. 1 ist die Schutzeinrichtung 140 als in dem Wechselrichter 110 angeordnet dargestellt, beispielsweise im selben Gehäuse. Die Schutzeinrichtung 140 kann aber auch vom Wechselrichter 110 getrennt ausgebildet oder angeordnet sein, beispielsweise als Teil eines zentralen Steuer- und/oder Überwachungssystems, welches somit ebenfalls ein Teil der erfindungsgemäßen Vorrichtung 100 sein kann.

Bei der Ausführungsform von Fig. 1 ist die Vorrichtung 100 so eingerichtet, dass die Schutzeinrichtung 140 die Notfallprozedur auslöst, sobald das Warnmodul 116 den Hinweis auf das mögliche Auftreten eines Lichtbogens erfasst hat.

Hierbei wird die Möglichkeit eines falsch-positiven Auslösens der Notfallprozedur bewusst in Kauf genommen, um die Anzahl des falsch-negativen Auslösens zu verringern, möglichst auf null zu setzen.

Weiterhin ist jedoch vorgesehen, dass nach dem Erfassen des Hinweises durch das Warnmodul 116 durch das Erkennungsmodul 130 festgestellt wird, ob tatsächlich ein Lichtbogen vorlag (richtig-positives Auslösen) oder nicht (falsch-positives Auslösen).

Im Vorangehenden wurde bereits eine Vielzahl von verschiedenen Verfahren beschrieben, basierend auf welchen Werten im Zusammenhang mit der Jensen-Shannon-Komplexität und der Permutationsentropie durch das Erkennungsmodul 130 erkannt werden kann, ob ein Lichtbogen tatsächlich vorliegt oder nicht. Im Folgenden wird eine besonders vorteilhafte Methode anhand von Fig. 2 beschrieben.

Fig. 2 zeigt hierzu den PE-JSK-Parameterraum, wobei die (normierte) Permutationsentropie (Symbol H in Gleichung (3) oben) auf der horizontalen Achse, und die Jensen-Shannon-Komplexität auf der vertikalen Achse aufgetragen ist. In diesem PE-JSK-Parameterraum sind nun verschiedene signalgebende Systeme auffindbar und anhand ihrer Position klassifizierbar. Oben rechts in Fig. 2 ist der gesamte PE-JSK-Parameterraum gezeigt, im Hauptbild von Fig. 2 ein Ausschnitt davon im Bereich hoher PE.

Weißes Rauschen beispielsweise findet sich am Endpunkt 5, d.h. am Punkt mit maximaler Entropie und minimaler Komplexität. Am Startpunkt 4 (wobei hier Start- und Endpunkt lediglich bezogen auf eine ansteigende Entropieskala benannt sind) finden sich beispielsweise periodische Signale. Die mit "min" und "max" markierten Kurven stellen mathematisch bedingte Grenzkurven für den Parameterraum dar, d.h. alle erdenklichen Punkte, insbesondere für PV-Systeme 200, befinden sich innerhalb des durch die beiden Kurven eingeschlossenen Raums.

Wie im Vorangehenden beschrieben wurde, kann nun aus der Zeitreihe der Amplitudenwerte $A(t_i)$ mittels des Unakafova-Ansatzes und/oder einer Methode mit nicht-überlappenden Fenstern für eine Vielzahl von Zeitpunkten $T_j$ jeweils ein Punkt in dem PE-JSK-Parameterraum ermittelt werden, wobei für jeden Zeitpunkt $T_j$ das (gleitende) Fenster, innerhalb dessen Muster klassifiziert werden, verschoben wird. Aus den so ermittelten Punkten ergibt sich eine Trajektorie 3 im PE-JSK-Parameterraum. Mit einem Stern (Markierung/Legende "P3") ist außerdem das Rauschverhalten des bekannten "pinken Rauschens" (engl. "pink noise") im PE-JSK-Parameterraum dargestellt. Das "pinke Rauschen" weist eine 1/f-Rauschcharakteristik auf, etwa im Gegensatz zu der konstanten Rauschcharakteristik eines "Weißen Rauschens".

Im Normalbetrieb (oder: Regelbetrieb) hat das PV-System 200 ein charakteristisches Rauschverhalten entsprechend einem charakterisierenden Punkt 1 in dem PE-JSK-Parameterraum (Markierung/Legende "P1" in Fig. 2). Lichtbögen haben ebenfalls ein sehr charakteristisches Rauschverhalten und erzeugen somit ein Rauschsignal, das sich von anderen Störsignalen (wie z.B. der Abschattung von Modulen, Rundfunksignalen, elektromagnetischen Einstreuungen, Schaltvorgängen im Wechselrichter, Modulen mit aktiver Elektronik und dergleichen) wesentlich unterscheidet. Daher ändert sich bei einem Auftreten eines tatsächlichen Lichtbogens schlagartig das Rauschverhalten. Die Eindeutigkeit der Verhaltensänderung wird vorteilhaft durch die im Vorangehenden beschriebene Vorverarbeitung durch das Vorverarbeitungsmodul 115 verbessert.

Versuche der Erfinder haben jedoch ergeben, dass das PV-System 200 in einem Fehlerzustand mit Lichtbogen (Markierung/Legende "P2" in Fig. 2) durch einen deutlich verschobenen Punkt 2 charakterisiert wird. Die Trajektorie 3 zwischen Punkt 1 und Punkt 2 kann dabei eine beträchtliche Größe annehmen, insbesondere pro Zeitdifferenz.

Das Erkennen, dass tatsächlich ein Lichtbogen aufgetreten ist, durch das Erkennungsmodul 130, kann somit beispielsweise dadurch erfolgen, dass die Weglänge der Trajektorie 3 pro Zeiteinheit (Weglängen-Änderungsgeschwindigkeit) erfasst wird, wobei eine Weglängen-Änderungsgeschwindigkeit oberhalb eines vorbestimmten Grenzwertes bedeutet, dass eine schlagartige Änderung in der Charakterisierung des PV-Systems 200 eingetreten ist. In einigen Varianten kann dies bereits ein Auslösen der Notfallprozedur durch die Schutzeinrichtung 140 bewirken.

Selbstverständlich können weitere Entscheidungskriterien dafür, dass ein Lichtbogen tatsächlich aufgetreten ist, alternativ oder zusätzlich verwendet werden. Wie aus Fig. 2 ebenfalls ersichtlich ist, kann das Auftreten des Lichtbogens beispielsweise ein Verschieben des charakterisierenden Punkts 1 in Richtung des Endpunktes 5 bewirken. Somit kann vorgesehen sein, dass durch das Erkennungsmodul 130 auf das Auftreten eines Lichtbogens entschieden wird, wenn die Weglängen-Änderungsgeschwindigkeit oberhalb des vorbestimmten Grenzwerts liegt und/oder (vorzugsweise "und") wenn der charakterisierende Punkt 1 bzw. 2 dabei seinen Abstand zum Endpunkt 5 verringert. Es kann auch vorgesehen sein, dass dies nur gilt, falls der Abstand sich um mindestens einen bestimmten Absolutwert und/oder um mindestens einen bestimmten Prozentwert verringert.

Eine weitere Möglichkeit zum Erkennen eines Lichtbogens oder zum Plausibilisieren oder Bestätigen des Erkennens eines Lichtbogens kann umfassen, dass durch das Erkennungsmodul 130 eine Rauschcharakteristik des charakterisierenden Punkts 2 in dem PE-JSK-Parameterraum ermittelt wird. Wie in Fig. 2 ersichtlich ist, kann der Punkt 2 insbesondere ein 1/f-Rauschverhalten, d.h. eine Rauschcharakteristik ähnlich oder genau wie "pinkes Rauschen" aufweisen. Ein Hinweis, oder ein Plausibilisierungsmerkmal, dass ein Lichtbogen aufgetreten ist, kann somit darin liegen, dass der charakterisierende Punkt 2 näherungsweise ein 1/f-Rauschverhalten aufweist.

Bei der Ausführungsform gemäß Fig. 1 ist somit das Erkennungsmodul 130 zum Durchführen einer regelbasierten Erkennung, ob ein Lichtbogen tatsächlich aufgetreten ist, ausgebildet und eingerichtet. Die genaue Ausgestaltung der Erkennungsregeln des Erkennungsmoduls 130 hängt dabei von der Größe, Gestaltung und Anordnung des PV-Systems 200 und der sonstigen beteiligten Leistungselektronik-Komponenten ab, ist aber in Kenntnis der vorliegenden Erfindung von einem Fachmann leicht ermittelbar.

Das Ergebnis der Prüfung (oder: Erkennung) durch das Erkennungsmodul 130 erkannt wurde wird der Schutzeinrichtung 140 mitgeteilt, z.B. im Push- oder Pullverfahren über einen internen Datenbus des Wechselrichters 110.

Wenn tatsächlich kein Lichtbogen aufgetreten ist, d.h., wenn ein falsch-positives Auslösen der Notfallprozedur vorlag, kann die Notfallprozedur durch die Schutzeinrichtung 140 unmittelbar wieder ausgesetzt (oder: aufgehoben) werden.

Es kann vorgesehen sein, dass die Schutzeinrichtung 140 sofort, oder nachdem die Notfallprozedur für eine vorbestimmte Anzahl von Malen ausgelöst und wegen falsch-positiven Auslösens wieder ausgesetzt wurde, mittels einer Kommunikationsschnittstelle 145 der Schutzeinrichtung 140 ein Signal aussendet, um ein Eingreifen eines Technikers anzufordern. Beispielsweise kann ein Anpassen der Erkennungsregeln nötig sein, oder eine Überprüfung des PV-Systems 200 mit Augenmerk auf einen Fehler abgesehen von einem Lichtbogen.

Falls durch das Erkennungsmodul 130 erkannt wird, dass tatsächlich (d.h., in Realität) ein Lichtbogen aufgetreten ist, d.h. ein richtig-positives Auslösen vorlag, kann die Schutzeinrichtung 140 eine über die Notfallprozedur hinausgehende Schutzprozedur o.ä. durchführen, z.B. weitere Stromleitungen stromlos schalten, mittels der Kommunikationsschnittstelle 145 einen Techniker anfordern und/oder dergleichen mehr.

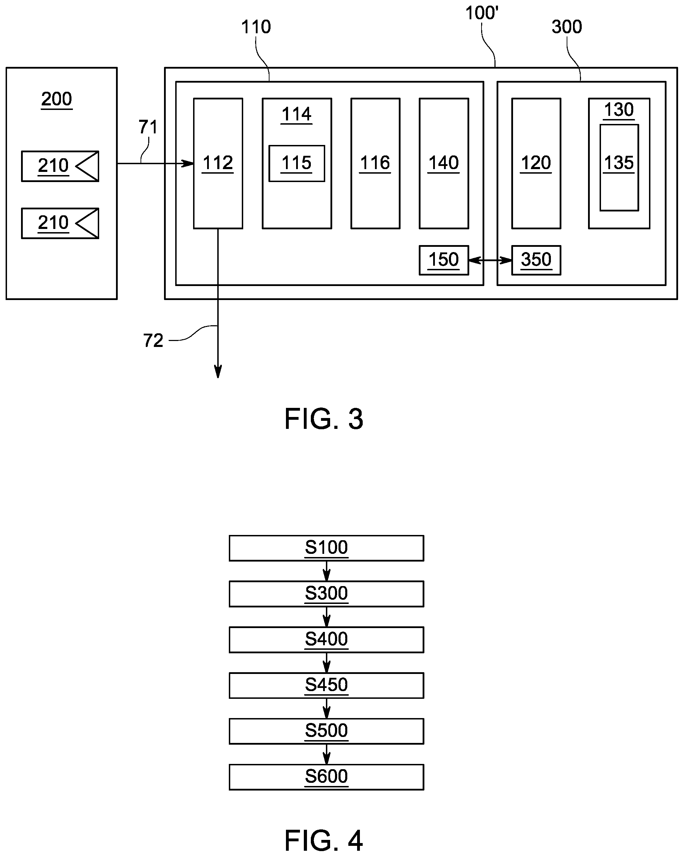

Fig. 3 zeigt eine schematische Darstellung einer Vorrichtung 100' gemäß einer weiteren Ausführungsform der vorliegenden Erfindung. Die Vorrichtung 100' ist eine Variante der Vorrichtung 100 und unterscheidet sich von dieser vornehmlich in der Ausprägung und Arbeitsweise des Rechenmoduls 120 und vor allem des Erkennungsmoduls 130.

Bei der Vorrichtung 100' sind das Rechenmodul 120 und das Erkennungsmodul 130 nicht innerhalb des Wechselrichters 110 angeordnet, und gegebenenfalls noch nicht einmal in der geographischen Nähe des Wechselrichters 110 und/oder des PV-Systems 200. Stattdessen sind das Rechenmodul 120 und das Erkennungsmodul 130 durch eine Cloud-basierte Recheneinrichtung 300 implementiert. Der Wechselrichter 110 weist eine Kommunikationsschnittstelle 150 zur bidirektionalen Kommunikation mit der Cloud-basierten Recheneinrichtung 300, insbesondere mit einer bidirektionalen Kommunikationsschnittstelle 350 der Cloud-basierten Recheneinrichtung 300 auf.

Über die Kommunikationsschnittstellen 150, 350 können alle nötigen Signale ausgetauscht werden. Beispielsweise können darüber die Messwerte des Messmoduls 114, der Hinweis des Warnmoduls 116, sowie ein Signal, welches das Ergebnis des Erkennens, ob ein Lichtbogen tatsächlich aufgetreten ist oder nicht, indiziert, ausgetauscht bzw. übermittelt werden.

Das Implementieren von Rechenmodul 120 und/oder Erkennungsmodul 130 in der Cloud-basierten Recheneinrichtung 300 hat, wie bereits erwähnt, den Vorteil, dass diese über erheblich mehr Rechenleistung verfügen kann als beispielsweise der Wechselrichter 110. Darüber hinaus kann eine einzelne Cloud-basierte Recheneinrichtung 300 vorteilhaft das Rechenmodul 120 und/oder das Erkennungsmodul 130 für eine Vielzahl von Wechselrichtern 110 und/oder PV-Systemen 200 implementieren, zumal nicht zu erwarten ist, dass überall gleichzeitig Hinweise auf Lichtbögen erfasst werden. Somit kann die Cloud-basierte Recheneinrichtung 300 mit ausreichender Rechenleistung für diese Aufgaben eingerichtet werden, während der Wechselrichter 110 selbst kompakt gehalten werden kann.

Besonders vorteilhaft ist es, wenn das Erkennungsmodul 130 ein Künstliche-Intelligenz-Submodul, KIS 135, aufweist, welches eine Künstliche-Intelligenz-Entität, insbesondere ein Maschinenlernenmodell, MLM, implementiert. Die Möglichkeiten sowie die möglichen Ausgestaltungen eines solchen MLMs wurden im Vorangehenden bereits ausführlich erläutert. Zwar ist es möglich, dass ein Erkennungsmodul 130 mit Künstliche-Intelligenz-Submodul, KIS 135, auch wie in Fig. 1 in dem Wechselrichter 110 selbst angeordnet ist, jedoch ist es aufgrund der üblicherweise größeren Rechenleistung bevorzugt, wenn das Künstliche-Intelligenz-Submodul, KIS 135, auf einer Cloud-basierten Recheneinrichtung 300 implementiert wird.

Das Künstliche-Intelligenz-Submodul, KIS 135, kann, zusätzlich oder alternativ zu den anhand von Fig. 2 beschriebenen Erkennungsregeln, auf weitere Arten feststellen, ob ein Lichtbogen aufgetreten ist oder nicht. Dabei kann das KIS 135 mindestens ein überwacht trainiertes MLM und/oder mindestens ein unüberwacht trainiertes MLM umfassen.

Vorteilhaft kann durch das Erkennungsmodul 130 (oder das KIS 135) zwischen dem Erstellen der auf PE und JSK basierenden Variablen und abgeleiteten Größen (inklusive auf der PE-JSK-Trajektorie basierenden Variablen und abgeleiteten Größen) einerseits und der Erkennung, ob ein Lichtbogen aufgetreten ist andererseits, eine Dimensionalitätsreduktion durchgeführt werden. Diese kann beispielsweise mittels Verfahren unter anderem basierend auf Matrizenfaktorisierung wie z.B. Hauptkomponentenanalyse (englisch "Principal Component Analysis", kurz: PCA) oder mittels auf Graphen basierenden Verfahren wie z.B. (bevorzugt) "Uniform Manifold Approximation and Projection", UMAP, oder eines gleichwertigen Verfahrens erfolgen. Eine Bewertung (d.h. das Feststellen, ob ein Lichtbogen aufgetreten ist) durch das Künstliche-Intelligenz-Submodul 135 (oder durch das Statistik-Submodul) kann dann nach der Dimensionalitätsreduktion durchgeführt werden.

Mit anderen Worten kann vorteilhaft folgende Pipeline vorgesehen sein:

1. Aufzeichnung des zeitlichen Verlaufs der Amplitudenwerte des Stroms, insbesondere mittels des Messmoduls 114
2. Datenvorverarbeitung, insbesondere mittels des Vorverarbeitungsmoduls 115
3. Berechnung der PE und der JSK sowie optional darauf basierender (oder: von diesen abgeleiteter) Größen wie PE-JSK-Trajektorie, Mittelwert, Ableitung und/oder dergleichen, insbesondere mittels des Rechenmoduls 120
4. Optionale Dimensionalitätsreduktion eines mehrdimensionalen Parameterraums, welcher von PE, JSK und/oder optional darauf basierenden Größen aufgespannt wird, insbesondere mittels des Rechenmoduls 120
5. Erkennen, ob ein Lichtbogen aufgetreten ist oder nicht, insbesondere mittels des Erkennungsmoduls 130, basierend auf dem Ergebnis der Dimensionalitätsreduktion.

Ein künstliches neuronales Netz, KNN, als ein mögliches überwacht trainiertes MLM, kann beispielsweise insbesondere mit einer Vielzahl von Daten trainiert werden, wobei die Daten annotiert (oder: gelabelt) sind mit der Information, ob in den entsprechenden Zeitfenstern W ein Lichtbogen aufgetreten ist oder nicht. Das künstliche neuronale Netz, KNN, wird somit trainiert, das Auftreten des Lichtbogens zu erkennen, möglicherweise auch auf Arten und Weisen, die über die beispielhaft genannten Erkennungsregeln hinausgehen.

Die vorliegende Erfindung stellt somit auch ein Verfahren bereit, ein künstliches neuronales Netz, KNN, zum Erkennen, ob ein Lichtbogen in einem Gleichstromsystem aufgetreten ist, oder nicht, zu trainieren. Hierzu werden Eingabedaten bereitgestellt, welche jeweils Werte der Permutationsentropie sowie der Jensen-Shannon-Komplexität im zeitlichen Verlauf aufweisen, und welche mit der Information annotiert sind, wo ein Lichtbogen aufgetreten ist und wo nicht. Es wird eine Loss-Funktion bereitgestellt, welche es bestraft, wenn das künstliche neuronale Netz, KNN, in einer Zeitreihe nicht entsprechend den Annotationen erkennt, ob ein Lichtbogen aufgetreten ist, oder nicht. In mehreren Epochen, über viele Datensätze hinweg, wird das künstliche neuronale Netz, KNN, dann trainiert, d.h. dessen Parameter automatisch optimiert, um die Loss-Funktion über den Trainingsdatensätzen zu minimieren.

Das Künstliche-Intelligenz-Submodul, KIS 135, kann außer mindestens einem Maschinenlernmodell, MLM, wie etwa einem KNN, "Logistic Regression", einem Entscheidungsbaum ("Decision Trees"), und/oder einer "Support Vector Machine", alternativ oder zusätzlich auch mindestens ein statistisches Verfahren verwenden. Führt das Künstliche-Intelligenz-Submodul 135 ausschließlich ein oder mehrere statistische Verfahren durch, kann es auch als Statistik-Submodul bezeichnet werden.

Bevorzugt kann das KIS 135 alternativ ein unüberwacht trainiertes MLM implementieren. Vorteilhaft ist es hierfür, PE und JSK und/oder darauf basierende abgeleitete Größen (Mittelwerte, Ableitungen, Maximal- und Minimalwerte und dergleichen) mittels der bekannten Verfahren "Uniform Manifold Approximation and Projection", UMAP, und "Density-Based Spatial Clustering of Applications with Noise", DBSCAN, zu clustern. Hierauf basierend können Signale im Betrieb des PV-Systems (d.h. in der "deployment stage", der Verwendung des trainierten MLMs) dann entweder als zu einem Cluster gehörend erkannt werden, welcher Lichtbögen klassifiziert, oder zu einem Cluster, welcher einen Normalbetrieb indiziert.

Fig. 4 zeigt ein schematisches Flussdiagramm zur Illustration eines Verfahrens gemäß einer weiteren Ausführungsform der vorliegenden Erfindung, d.h. eines computerimplementierten Verfahrens zum Erkennen eines Lichtbogens in einem Photovoltaik-System 200. Das Verfahren nach Fig. 4 ist mit den Ausführungsformen der erfindungsgemäßen Vorrichtung durchführbar, insbesondere mit den Vorrichtungen 100; 100', aber auch unabhängig davon. Dementsprechend kann das Verfahren nach Fig. 4 gemäß allein im Vorangehenden mit Bezug auf die erfindungsgemäße Vorrichtung beschriebenen Varianten, Modifikationen, Optionen und Weiterentwicklungen modifiziert werden, und umgekehrt.

In einem Schritt S100 wird ein zeitlicher Verlauf von Amplitudenwerten, A(ti), einer elektrischen Größe eines elektrischen Stroms aus dem PV-System 200 erfasst, insbesondere gemessen. Dies geschieht beispielsweise wie im Vorangehenden allgemein sowie mit Bezug auf das Messmodul 114 beschrieben wurde. Insbesondere kann dieser Schritt S200 innerhalb eines (oder: von einem) Wechselrichters 110 durchgeführt werden. Dem Schritt S100 nachfolgend kann eine Vorverarbeitung durchgeführt werden, insbesondere wie sie im Vorangehenden mit Bezug auf das Vorverarbeitungsmodul 115 beschrieben wurde. Die weiteren Verfahrensschritte können dann auf dem vorverarbeiteten (z.B. gefilterten) zeitlichen Verlauf von Amplitudenwerten, A(ti), basierend durchgeführt werden, ohne dass dies zusätzlich explizit erläutert zu werden braucht.

In einem Schritt S300 wird mindestens ein Wert einer Permutationsentropie, PE, des zeitlichen Verlaufs der Amplitudenwerte $A(t_i)$ bestimmt.

In einem Schritt S400 wird mindestens ein Wert einer Jensen-Shannon-Komplexität, JSK, des zeitlichen Verlaufs der Amplitudenwerte $A(t_i)$ bestimmt.

Die Schritte S300 und/oder S400 können insbesondere so durchgeführt werden beispielsweise wie im Vorangehenden allgemein sowie mit Bezug auf das Rechenmodul 120 beschrieben wurde. Insbesondere können die Schritte S300 und/oder S400 innerhalb eines (oder: von einem) Wechselrichters 110 oder aber von einer Cloud-basierten Recheneinrichtung 300 durchgeführt werden.

Nachfolgend an die Schritte S300 und/oder S400 kann in einem Schritt S450 eine Nachverarbeitung erfolgen, beispielsweise wie mit Bezug auf das Rechenmodul 120 im Vorangehenden beschrieben wurde. Als Teil der Nachverarbeitung kann mindestens eine von PE und/oder JSK abgeleitete Größe berechnet werden, beispielsweise ein Mittelwert, eine Ableitung, eine Trajektorie, ein Gradient, ein Minimalwert, ein Maximalwert und/oder dergleichen mehr. Es versteht sich, dass Schritte, die von "basierend auf der JSK" und/oder von "basierend auf der PE" sprechen, auch beinhalten, dass die Schritte indirekt auf der JSK und/oder der PE basieren können und damit insbesondere auf mindestens einer von JSK und/oder PE abgeleiteten Größe basieren können. Alternativ oder zusätzlich kann als Teil der Nachverarbeitung eine Dimensionalitätsreduktion (z.B. von PE, JSK, und/oder mindestens einer abgeleiteten Größe, insbesondere eines von diesen aufgespannten Parameterraums) erfolgen, wie im Vorangehenden ebenfalls schon erläutert wurde.

In einem Schritt S500 wird erkannt, ob in dem PV-System tatsächlich ein Lichtbogen aufgetreten ist, basierend auf dem mindestens einen bestimmten Wert der Permutationsentropie, PE, sowie auf dem mindestens einen bestimmten Wert der Jensen-Shannon-Komplexität, JSK, oder spezifisch auf von PE und/oder JSK abgeleiteten Größen. Dies geschieht vorteilhaft beispielsweise wie im Vorangehenden allgemein sowie mit Bezug auf das Erkennungsmodul 130 beschrieben wurde. Insbesondere kann der Schritt S500 innerhalb eines (oder: von einem) Wechselrichters 110 oder aber von einer Cloud-basierten Recheneinrichtung 300 durchgeführt werden.

Als Reaktion auf das Erkennen in Schritt S500, dass tatsächlich ein Lichtbogen aufgetreten ist, kann in einem Schritt S600 eine Notfallprozedur ausgelöst werden, beispielsweise wie im Vorangehenden allgemein sowie mit Bezug auf die Schutzeinrichtung 140 beschrieben wurde.

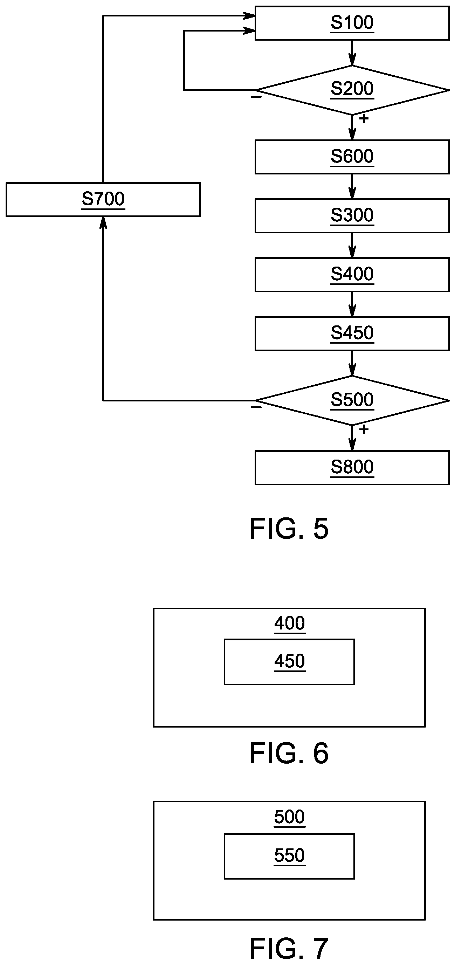

Eine Variante des Verfahrens, welche ein alternatives Vorgehen zum Auslösen einer Notfallprozedur umfasst, wird anhand von Fig. 5 im Folgenden erläutert.

Fig. 5 zeigt ein schematisches Flussdiagramm zur Illustration eines Verfahrens gemäß noch einer weiteren Ausführungsform der vorliegenden Erfindung, d.h. eines computerimplementierten Verfahrens zum Erkennen eines Lichtbogens in einem Photovoltaik-System 200. Auch das Verfahren gemäß Fig. 5 ist mit den Ausführungsformen der erfindungsgemäßen Vorrichtung durchführbar, insbesondere mit den Vorrichtungen 100; 100', aber auch unabhängig davon. Dementsprechend kann das Verfahren nach Fig. 5 gemäß allein im Vorangehenden mit Bezug auf die erfindungsgemäße Vorrichtung beschriebenen Varianten, Modifikationen, Optionen und Weiterentwicklungen modifiziert werden, und umgekehrt.

Bei der Beschreibung werden nur die Unterschiede zum Verfahren gemäß Fig. 4 erläutert werden, wobei gleich bezeichnete Schritte ansonsten gleich sein sollen. Selbstverständlich kann jedoch jeder Schritt gemäß den im Vorangehenden beschriebenen Varianten verändert werden.

Bei dem Verfahren gemäß Fig. 5 wird in einem Schritt S200 ein Hinweis erfasst, dass in dem PV-System 200 ein Lichtbogen aufgetreten sein könnte, beispielsweise wie im Vorangehenden allgemein sowie mit Bezug auf das Warnmodul 116 beschrieben wurde. Insbesondere kann dieser Schritt S200 innerhalb eines (oder: von einem) Wechselrichters 110 durchgeführt werden.

Bei dem Verfahren gemäß Fig. 5 werden die nachfolgenden Schritte S300-S500 nur dann durchgeführt, wenn zuvor in dem Schritt S200 der Hinweis erfasst wurde ("+"-Zeichen in Fig. 5). Auf diese Weise kann unnötiger Verbrauch von Rechenleistung vermieden werden. Dies ist insbesondere vorteilhaft, wenn diese Schritte durch eine zentrale Recheneinrichtung, z.B. eine Cloud-basierte Recheneinrichtung 300, durchgeführt werden. Wird kein Hinweis erfasst ("-"-Zeichen in Fig. 5), so wird der Schritt S100 weiter fortgesetzt (welcher sowieso immer als fortlaufend durchgeführt verstanden werden kann).

In jedem Fall wird jedoch bei dem Verfahren gemäß Fig. 5, als Reaktion darauf, dass der Hinweis erfasst wurde, in dem Schritt S600 die Notfallprozedur ausgelöst. Idealerweise erfolgt dies unmittelbar nach dem Erfassen S200 des Hinweises, vor oder gleichzeitig damit, dass die Schritt S300-S500 begonnen werden.

Wird nun in Schritt S500 erkannt, dass tatsächlich kein Lichtbogen aufgetreten ist ("-"-Zeichen in Fig. 5), also falsch-positiv ausgelöst wurde, wird in einem Schritt S700 die Notfallprozedur wieder ausgesetzt (oder: zurückgenommen), und das Verfahren wird mit Schritt S100 weiter fortgesetzt.

Wird hingegen in Schritt S500 erkannt, dass tatsächlich ein Lichtbogen aufgetreten ist ("+"-Zeichen in Fig. 5), kann in einem optionalen Schritt S800 eine Schutzprozedur durchgeführt werden, deren Maßnahmen die der Notfallprozedur entweder verlängern (z.B. dauerhaft machen) und/oder im Umfang über diese hinausgehen. Dies kann beispielsweise erfolgen wie im Vorangehenden allgemein sowie mit Bezug auf die Schutzeinrichtung 140 erläutert wurde.

Fig. 6 zeigt ein schematisches Blockdiagramm zum Erläutern eines Computerprogrammprodukts 400 gemäß einer weiteren Ausführungsform der vorliegenden Erfindung. Das Computerprogrammprodukt 400 umfasst ausführbaren Programmcode 450, welcher dazu ausgelegt ist, wenn er ausgeführt wird, das erfindungsgemäße Verfahren, insbesondere nach Fig. 4 oder Fig. 5, durchzuführen.

Fig. 7 zeigt ein schematisches Blockdiagramm zum Erläutern eines nicht-flüchtigen, computerlesbaren Datenspeichermediums 500 gemäß einer weiteren Ausführungsform der vorliegenden Erfindung. Das Datenspeichermedium 500 umfasst ausführbaren Programmcode 550, welcher dazu ausgelegt ist, wenn er ausgeführt wird, das erfindungsgemäße Verfahren, insbesondere nach Fig. 4 oder Fig. 5, durchzuführen.

Bezugszeichenliste

| | |
|---|---|
| 1 | Punkt vor Auftreten eines Lichtbogens |
| 2 | Punkt nach Auftreten eines Lichtbogens |
| 3 | Trajektorie |

| 4 | Startpunkt |
|---|---|
| 5 | Endpunkt |
| 71 | Gleichstrom |
| 72 | Wechselstrom |
| 100 | Vorrichtung |
| 100' | Vorrichtung |
| 110 | Wechselrichter |
| 112 | Leistungselektronik |
| 114 | Messmodul |
| 115 | Vorverarbeitungsmodul |
| 116 | Warnmodul |
| 120 | Rechenmodul |
| 130 | Erkennungsmodul |
| 135 | Künstliche-Intelligenz-Submodul |
| 140 | Schutzeinrichtung |
| 145 | Kommunikationsschnittstelle |
| 150 | Kommunikationsschnittstelle |
| 200 | PV-System |
| 210 | PV-Modul |
| 300 | Cloud-basierte Recheneinrichtung |
| 350 | Kommunikationsschnittstelle |
| 400 | Computerprogrammprodukt |
| 450 | Programmcode |
| 500 | Datenspeichermedium |
| 550 | Programmcode |

**Patentansprüche**

1. Computerimplementiertes Verfahren zum Erkennen eines Lichtbogens in einem Photovoltaik-System (200), mit den Schritten:

   Erfassen (S100) eines zeitlichen Verlaufs von Amplitudenwerten einer elektrischen Größe eines elektrischen Stroms aus dem Photovoltaik-System, PV-System (200);
   Bestimmen (S300) mindestens eines Werts einer Permutationsentropie, PE, basierend auf dem zeitlichen Verlauf der Amplitudenwerte;
   Bestimmen (S400) mindestens eines Werts einer Jensen-Shannon-Komplexität, JSK, basierend auf dem zeitlichen Verlauf der Amplitudenwerte;
   Erkennen (S500), ob in dem PV-System (200) tatsächlich ein Lichtbogen aufgetreten ist, basierend auf dem mindestens einen bestimmten Wert der Permutationsentropie, PE, sowie auf dem mindestens einen bestimmten Wert der Jensen-Shannon-Komplexität, JSK.

2. Verfahren nach Anspruch 1,
   wobei eine Zeitreihe von Tupeln $(PE(t_i), JSK(t_i))$ für eine Mehrzahl von Zeitpunkten $t_i$ berechnet wird, und das Erkennen, ob ein Lichtbogen aufgetreten ist, auf der berechneten Zeitreihe basiert.

3. Verfahren nach Anspruch 1 oder 2,
   wobei zumindest eine zeitliche Trajektorie von Punkten in einem PE-JSK-Parameterraum berechnet wird, und das Erkennen, ob ein Lichtbogen aufgetreten ist, zumindest auf der berechneten zeitlichen Trajektorie basiert.

4. Verfahren nach einem der Ansprüche 1 bis 3,
   wobei die berechnete Zeitreihe von Tupeln und/oder die berechnete zeitliche Trajektorie in eine Künstliche-Intelligenz-Einheit, KIE, eingegeben werden, welche das Erkennen, ob ein Lichtbogen aufgetreten ist, darauf basierend durchführt.

5. Verfahren nach einem der Ansprüche 1 bis 4, umfassend außerdem den Schritt:
   Erfassen (S200) eines Hinweises, dass in dem PV-System (200) ein Lichtbogen aufgetreten sein könnte, basierend auf dem mindestens einen bestimmten Wert der Permutationsentropie, PE, und/oder auf dem mindestens einen bestimmten Wert der Jensen-Shannon-Komplexität, JSK.

6. Verfahren nach einem der Ansprüche 1 bis 4,
außerdem umfassend:

Erfassen (S200) eines Hinweises, dass in dem PV-System (200) ein Lichtbogen aufgetreten sein könnte;
Auslösen (S600) einer Notfallprozedur als Reaktion auf das Erfassen (S200) des Hinweises,
wobei (S500) das Erkennen, ob tatsächlich ein Lichtbogen aufgetreten ist, danach erfolgt, und die Notfallprozedur wieder ausgesetzt wird (S700), falls erkannt wird, dass tatsächlich kein Lichtbogen aufgetreten ist.

7. Verfahren nach einem der Ansprüche 1 bis 5, umfassend: Auslösen (S600) einer Notfallprozedur, falls erkannt wird, dass tatsächlich ein Lichtbogen aufgetreten ist.

8. Verfahren nach einem der Ansprüche 1 bis 7, wobei der erfasste zeitliche Verlauf der Amplitudenwerte einer Vorfilterung unterzogen wird, um einen gefilterten zeitlichen Verlauf der Amplitudenwerte zu erzeugen, und wobei das Bestimmen (S300) des mindestens einen Werts der Permutationsentropie, PE, basierend auf dem gefilterten zeitlichen Verlauf der Amplitudenwerte erfolgt und/oder wobei das Bestimmen (S400) des mindestens einen Werts der Jensen-Shannon-Komplexität, JSK, basierend auf dem gefilterten zeitlichen Verlauf der Amplitudenwerte erfolgt.

9. Vorrichtung (100; 100') zum Erkennen eines Lichtbogens in einem Photovoltaik-System (200), umfassend:

einen Wechselrichter (110) zum Erzeugen von Wechselstrom (72) aus einem von einem Photovoltaik-System (200) empfangenen Gleichstrom (71), umfassend zumindest ein Messmodul (114), welches zum Erfassen eines zeitlichen Verlaufs von Amplitudenwerten einer elektrischen Größe des empfangenen Gleichstroms (71) ausgebildet ist; und
wobei die Vorrichtung (100; 100') außerdem umfasst:

ein Rechenmodul (120), welches zum Bestimmen mindestens eines Werts einer Permutationsentropie, PE, basierend auf dem zeitlichen Verlauf der Amplitudenwerte sowie zum Bestimmen mindestens eines Werts einer Jensen-Shannon-Komplexität, JSK, basierend auf dem zeitlichen Verlauf der Amplitudenwerte eingerichtet ist;
ein Erkennungsmodul (130), welches dazu eingerichtet ist, zu erkennen, ob in dem PV-System (200) ein Lichtbogen aufgetreten ist, basierend auf dem mindestens einen bestimmten Wert der Permutationsentropie, PE, sowie auf dem mindestens einen bestimmten Wert der Jensen-Shannon-Komplexität, JSK; und
eine Schutzeinrichtung (140), mittels welcher eine Notfallprozedur zum Schutz des PV-Systems (200) vor einem Lichtbogen auslösbar ist.

10. Vorrichtung (100') nach Anspruch 9, wobei das Erkennungsmodul (130) ein Künstliche-Intelligenz-Submodul (135), KIS, aufweist, welches eine Künstliche-Intelligenz-Einheit, KIE, implementiert, welche dazu trainiert und eingerichtet ist, basierend auf dem mindestens einen bestimmten Wert der JSK und dem mindestens einen Wert der PE zu erkennen, ob ein Lichtbogen aufgetreten ist.

11. Vorrichtung (100') nach einem der Ansprüche 9 oder 10, außerdem aufweisend eine Cloud-basierte Recheneinrichtung (300),
wobei der Wechselrichter (110) außerdem eine Kommunikationsschnittstelle (150) zur bidirektionalen Kommunikation mit der Cloud-basierten Recheneinrichtung (300) aufweist, und wobei das Rechenmodul (120) und/oder das Erkennungsmodul (130) durch die Cloud-basierte Recheneinrichtung (300) implementiert ist.

12. Vorrichtung (100; 100') nach einem der Ansprüche 9 bis 11, außerdem umfassend ein Warnmodul (116), welches dazu ausgebildet ist, einen Hinweis zu erzeugen, dass ein Lichtbogen in dem Photovoltaik-System, PV-System (200), aufgetreten sein könnte;
wobei die Schutzeinrichtung (140) dazu eingerichtet ist, die Notfallprozedur als Reaktion auf das Erfassen des Hinweises, dass ein Lichtbogen aufgetreten sein könnte, auszulösen (S600), und wobei das Erkennungsmodul (130) dazu eingerichtet ist, danach zu erkennen, ob tatsächlich ein Lichtbogen aufgetreten ist, und wobei die Schutzeinrichtung (140) weiters dazu eingerichtet ist, die Notfallprozedur wieder auszusetzen (S700), falls das Erkennungsmodul (130) erkannt hat, dass tatsächlich kein Lichtbogen aufgetreten ist.

13. Vorrichtung (100; 100') nach einem der Ansprüche 9 bis 11, wobei die Schutzeinrichtung (140) dazu eingerichtet ist, die Notfallprozedur auszulösen, falls das Erkennungsmodul (130) erkannt hat, dass in dem PV-System tatsächlich ein Lichtbogen aufgetreten ist.

14. Computerprogrammprodukt (400), welches ausführbaren Programmcode (450) aufweist, welcher dazu ausgelegt ist, wenn er ausgeführt wird, das Verfahren gemäß einem der Ansprüche 1 bis 8 auszuführen.

15. Nicht-flüchtiges computerlesbares Datenspeichermedium (500), welches ausführbaren Programmcode (550) aufweist, welcher dazu ausgelegt ist, wenn er ausgeführt wird, das Verfahren gemäß einem der Ansprüche 1 bis 8 auszuführen.

**FIG. 1**

**FIG. 2**

FIG. 3

FIG. 4

S100

S200

S600

S300

S400

S450

S500

S800

S700

**FIG. 5**

400

450

**FIG. 6**

500

550

**FIG. 7**

Europäisches
Patentamt

European
Patent Office

Office européen
des brevets

**EUROPÄISCHER RECHERCHENBERICHT**

Nummer der Anmeldung

EP 23 17 8979

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 113 852 349 A (ZHONGXINNENG WUXI SMART ENERGY CO LTD) 28. Dezember 2021 (2021-12-28) * Absätze [0021] - [0131]; Ansprüche 1-8; Abbildungen 1-5 * ----- | 1-15 | INV. H02S50/00 |
| A | US 2021/194424 A1 (GAO FENG [CN] ET AL) 24. Juni 2021 (2021-06-24) * Absätze [0028] - [0088]; Ansprüche 1-9; Abbildungen 1,2 * ----- | 1-15 | |

RECHERCHIERTE
SACHGEBIETE (IPC)

H02S

Der vorliegende Recherchenbericht wurde für alle Patentansprüche erstellt

| Recherchenort | Abschlußdatum der Recherche | Prüfer |
|---|---|---|
| Den Haag | 2. Januar 2024 | Boero, Mauro |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

..........................................................................................
& : Mitglied der gleichen Patentfamilie, übereinstimmendes
Dokument

EPO FORM 1503 03.82 (P04C03)

**EP 4 478 606 A1**

## ANHANG ZUM EUROPÄISCHEN RECHERCHENBERICHT
## ÜBER DIE EUROPÄISCHE PATENTANMELDUNG NR.

EP 23 17 8979

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-01-2024

| Im Recherchenbericht angeführtes Patentdokument | Datum der Veröffentlichung | Mitglied(er) der Patentfamilie | Datum der Veröffentlichung |
|---|---|---|---|
| CN 113852349 A | 28-12-2021 | KEINE | |
| US 2021194424 A1 | 24-06-2021 | CN 109934423 A | 25-06-2019 |
| | | JP 6968378 B2 | 17-11-2021 |
| | | JP 2021523673 A | 02-09-2021 |
| | | US 2021194424 A1 | 24-06-2021 |
| | | WO 2020215405 A1 | 29-10-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **C. BANDT** ; **B. POMPE**. Permutation entropy: a natural complexity measure for time series. *Phys. Rev. Lett.*, 2002, vol. 88 (17), 174102
- **V.A. UNAKAFOVA** ; **K. KELLER**. Efficiently measuring complexity on the basis of real-world Data. *Entropy*, 2013, vol. 15 (10), 4392-4415
- **O. ROSSO et al.** Distinguishing noise from chaos. *Phys. Rev. Lett*, 2007, vol. 99 (15), 154102
- **H. AZAMI et al.** Improved multiscale permutation entropy for biomedical signal analysis: Interpretation and application to electroencephalogram recordings. *Biomed. Process. Control*, 2016, vol. 23, 28-41